# EUROPEAN PATENT APPLICATION

(11) **EP 3 076 210 A1**
(43) Date of publication of application: **05.10.2016**
(21) Application number: 14865200.1
(22) Date of filing: 19.09.2014
(51) Int. Cl.: G02B 6/122, G01N 21/03, G01N 21/41, G01N 21/78

(54) **OPTICAL WAVEGUIDE, AND SPR SENSOR CELL AND COLORIMETRIC SENSOR CELL WHICH USE OPTICAL WAVEGUIDE**

(30) Priority: 28.11.2013 JP 2013245640; 01.09.2014 JP 2014176704
(71) Applicant: Nitto Denko Corporation, Ibaraki-shi, Osaka 567-8680 (JP)
(72) Inventor: MORITA, Shigenori, Ibaraki-shi, Osaka 567-8680 (JP); KONTANI, Tomohiro, Ibaraki-shi, Osaka 567-8680 (JP); OZAKI, Mayu, Ibaraki-shi, Osaka 567-8680 (JP); HARA, Kazutaka, Ibaraki-shi, Osaka 567-8680 (JP); MIYAZAKI, Manabu, Ibaraki-shi, Osaka 567-8680 (JP)
(74) Representative: Alt, Michael
(86) International application number: PCT/JP2014/074785
(87) International publication number: WO 2015/079785

(57) **Abstract**

An optical waveguide in which the occurrence of a crack in a cladding layer is prevented, and the SPR sensor cell and the colorimetric sensor cell each using the optical waveguide can be provided. The optical waveguide according to the present invention includes a cladding layer and a core layer buried in the cladding layer so that at least one surface of the core layer is exposed. The cladding layer has a surface hardness of from HB to 2H.

## Description

### Technical Field

The present invention relates to an optical waveguide, and an SPR sensor cell and a colorimetric sensor cell each using the optical waveguide.

### Background Art

Hitherto, in the fields of chemical analysis, biochemical analysis, and the like, a surface plasmon resonance (SPR) sensor including an optical fiber has been used. In the SPR sensor including an optical fiber, a metal thin film is formed on an outer circumferential surface of a tip end portion of the optical fiber, and an analysis sample is fixed to the optical fiber into which light is guided. Among the light to be guided, light having a particular wavelength generates surface plasmon resonance in the metal thin film, and light intensity thereof is attenuated. In such SPR sensor, the wavelength of the light generating surface plasmon resonance generally varies depending on, for example, a refractive index of an analysis sample to be fixed to the optical fiber. Therefore, when a wavelength at which light intensity is attenuated after the generation of surface plasmon resonance is measured, the wavelength of the light generating surface plasmon resonance can be identified. Further, when a change in the wavelength at which light intensity is attenuated is detected, it can be confirmed that the wavelength of the light generating surface plasmon resonance has changed, and hence a change in refractive index of the analysis sample can be confirmed. As a result, such SPR sensor can be used for various chemical analyses and biochemical analyses, such as measurement of a sample concentration and detection of an immunoreaction.

In the SPR sensor including an optical fiber, the tip end portion of the optical fiber has a fine cylindrical shape, and hence there is a problem in that it is difficult to form the metal thin film and fix an analysis sample to the optical fiber. In order to solve the problem, for example, there has been proposed an SPR sensor cell including a core through which light is transmitted and a clad covering the core, in which a through-hole extending to a surface of the core is formed at a predetermined position of the clad, and a metal thin film is formed on the surface of the core at a position corresponding to the through-hole (for example, Patent Literature 1). In such SPR sensor cell, it is easy to form the metal thin film for generating surface plasmon resonance on the surface of the core and fix the analysis sample onto the surface. However, in such SPR sensor, a crack may be formed in a surface of the cladding during a process of forming the cladding by curing a varnish. The crack is more liable to occur when the cladding is formed through use of a halogen-containing resin material (for example, Patent Literature 2).

### Citation List

### Patent Literature

[PTL 1] JP 2000-19100 A
[PTL 2] JP 2010-84150 A

### Summary of Invention

### Technical Problem

The present invention has been made in order to solve the problem of the related art described above, and an object of the present invention is to provide an optical waveguide in which the occurrence of a crack in a cladding layer is prevented, and an SPR sensor cell and a colorimetric sensor cell each using the optical waveguide.

### Solution to Problem

As a result of investigations on the mechanism of crack occurrence, which have been made by the inventors of the present invention, it was presumed that a crack may occur because, owing to a high surface hardness of a resin for forming a cladding, the stress of curing shrinkage of the resin, or the like is liable to be concentrated on the surface of the cladding. Then, the inventors have foundthat the occurrence of a crack can be prevented by adjusting the surface hardness of the cladding to a predetermined range. Thus, the inventors have completed the present invention.

That is, according to one embodiment of the present invention, there is provided an optical waveguide including: a cladding layer; and a core layer buried in the cladding layer so that at least one surface of the core layer is exposed, in which the cladding layer has a surface hardness of from HB to 2H.

In one embodiment of the present invention, the cladding layer includes a resin for forming a cladding layer and particles dispersed in the resin for forming a cladding layer.

In one embodiment of the present invention, a filling ratio of the particles in the cladding layer is from 2% to 50%.

In one embodiment of the present invention, an average particle diameter (ϕ) of the particles is from 200 nm to 2.5 µm.

In one embodiment of the present invention, the cladding layer has a storage modulus of 0.3 GPa or less.

In one embodiment of the present invention, the resin for forming a cladding layer contains a halogen.

According to another aspect of the present invention, there is provided an SPR sensor cell. The SPR sensor cell of the present invention includes the optical waveguide.

According to another aspect of the present invention, there is provided a colorimetric sensor cell. The colorimetric sensor cell of the present invention includes the optical waveguide.

### Advantageous Effects of Invention

According to the present invention, the optical waveguide in which the occurrence of a crack in a cladding layer is prevented, and the SPR sensor cell and the colorimetric sensor cell each using the optical waveguide can be provided.

### Brief Description of Drawings

FIG. **1** is a schematic perspective view for illustrating an optical waveguide according to a preferred embodiment of the present invention.
FIG. **2** is a schematic perspective view of an SPR sensor cell according to the preferred embodiment of the present invention.
FIG. **3** is a schematic sectional view of the SPR sensor cell illustrated in FIG. **2** taken along the line **Ia-Ia.**
FIG. **4** is a schematic perspective view of a colorimetric sensor cell according to the preferred embodiment of the present invention.
FIG**. 5** is a schematic sectional view of the colorimetric sensor cell illustrated in FIG. **4** taken along the line **Ib-Ib.**
FIGS. **6** are schematic views for illustrating an example of a method of manufacturing the optical waveguide of the present invention.

### Description of Embodiments

### [A. Optical Waveguide]

An optical waveguide of the present invention includes a cladding layer having a predetermined surface hardness, and a core layer buried in the cladding layer so that at least one surface of the core layer is exposed. An optical loss (propagation loss) of the optical waveguide of the present invention at a wavelength of 660 nm is, for example, less than 2.6 dB/cm, preferably 2.0 dB/cm or less, more preferably 1.5 dB/cm or less. When the optical loss falls within this range, the optical waveguide can be suitably used as a detection unit of a sensor cell, such as an SPR sensor cell or a colorimetric sensor cell to be described later. The optical loss is measured by using a cutback technique.

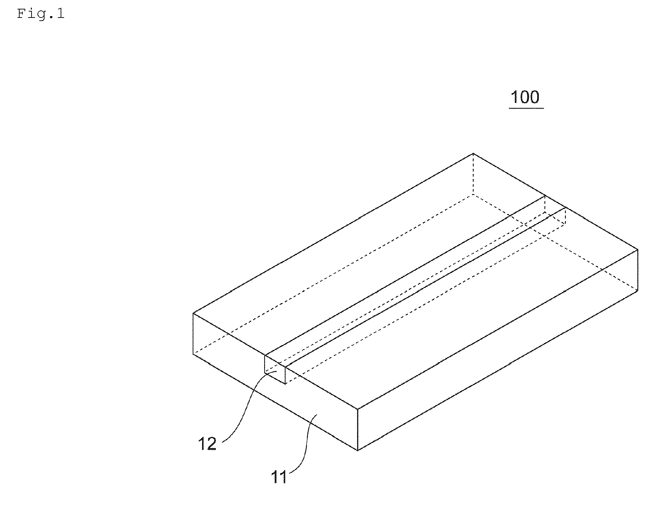

FIG. **1** is a schematic perspective view for illustrating an optical waveguide according to a preferred embodiment of the present invention. In the illustrated example, an optical waveguide **100** includes a cladding layer **11** and a core layer **12** buried in the cladding layer **11** so that an incidence port, an output port, and an upper surface of the core layer **12** are exposed. The optical waveguide **100** is formed into a flat plate-like shape having a substantially rectangular shape in a plan view. The thickness of the cladding layer (thickness from the upper surface of the core layer) is, for example, from 5 µm to 400 µm. Unlike the illustrated example, the upper surface and a lower surface of the core layer may be exposed from the cladding layer.

The cladding layer **11** preferably includes a resin for forming a cladding layer and particles dispersed in the resin for forming a cladding layer. When the particles are dispersed in the cladding layer, in the case of forming the cladding layer through use of a high-hardness resin (e.g., a resin having a surface hardness of 4H or more after curing), such as a halogen-containing resin, the surface hardness can be adjusted to a predetermined range to be described later without a significant increase in storage modulus. It is considered that the cladding layer consequently has appropriate softness, and hence a stress due to curing shrinkage is dispersed and the occurrence of a crack is prevented.

Any suitable particles may be used as the particles. For example, the particles are formed of a material having a refractive index of preferably from 1.40 to 3.00, more preferably from 1.43 to 2.60. Using such a material has an advantage in that a refractive index of the cladding layer is easily adjusted to fall within a desired range. Further, for example, the particles are formed of a material having an extinction coefficient of preferably 0.1 or less, more preferably 0. When the particles are formed of a material having such extinction coefficient, the influence of an increase in temperature of the particles due to light absorption can be avoided. The refractive index as used herein means a refractive index at a wavelength of 830 nm. Further, the extinction coefficient as used herein means an extinction coefficient at a wavelength of 830 nm.

A metal and an inorganic oxide are given as specific examples of a material for forming the particles. Preferred examples of the metal may include titanium, tantalum, aluminum, zinc, chromium, and iron. In addition, preferred examples of the inorganic oxide may include metal oxides (such as titanium oxide (TiO₂), tantalum oxide (Ta₂O₅), aluminum oxide (Al₂O₃), zinc oxide (ZnO), chromium oxide (Cr₂O₃), iron oxide (Fe₂O₃), and copper oxide (CuO)) and metalloid oxides (such as boron oxide (B₂O₃), silicon oxide (SiO₂), and germanium oxide (GeO₂)). The particles may be used alone or in combination.

An average particle diameter (ϕ) of the particles is, for example, from 10 nm to 5 µm. The lower limit of the average particle diameter is preferably 200 nm, more preferably 300 nm. Further, the upper limit of the average particle diameter is preferably 2.5 µm, more preferably 2.0 µm. With such an average particle diameter, the surface hardness of the cladding layer can be easily controlled to fall within a predetermined range to be described later. The average particle diameter as used herein means a median diameter. The average particle diameter of the particles in the cladding layer can be obtained based on, for example, laser diffraction/scattering particle size distribution measurement, or a volume-based particle size distribution that is obtained from a particle size distribution determined through image processing of an SEM image of a cross section of the cladding layer.

Any suitable resin capable of forming the cladding layer having a lower refractive index than that of the core layer described later may be used as the resin for forming a cladding layer, and a halogen-containing resin is preferably used. Specific examples of the halogen-containing resin include: fluorine atom-containing resins, such as polytetrafluoroethylene, a tetrafluoroethylene-hexafluoropropylene copolymer, a fluorinated epoxy resin, a fluorinated polyimide resin, a fluorinated polyamide resin, a fluorinated acrylic resin, a fluorinated polyurethane resin, and a fluorinated siloxane resin; chlorine atom-containing resins, such as a vinyl chloride resin, a vinyl chloride-ethylene copolymer, and a chlorinated polyolefin resin; and modified products thereof. From the viewpoint of, for example, obtaining a desired refractive index, a fluorine atom-containing resin is preferred. They may be used alone or in combination. Any such resin may be preferably blended with a photosensitizing agent so as to be used as a photosensitive material.

The halogen-containing resin has a halogen content of preferably 35 wt% or more, more preferably 40 wt% or more, still more preferably 50 wt% or more. When the halogen content falls within such range, a cladding layer having a low refractive index can be easily obtained. Meanwhile, the upper limit of the halogen content is preferably 78 wt%. When the upper limit is more than 78 wt%, the cladding layer may undergo liquefaction or gasification, thereby failing to maintain the shape of the cladding layer.

A refractive index of the resin for forming a cladding layer is lower than the refractive index of the particles. A difference between the refractive index of the resin for forming a cladding layer and the refractive index of the particles is preferably 0.03 or more, more preferably 0.05 or more, still more preferably 0.07 or more, yet still more preferably 0.10 or more.

The refractive index of the resin for forming a cladding layer is preferably 1.42 or less, more preferably less than 1.40, still more preferably 1.38 or less.

A filling ratio of the particles in the cladding layer **11** is, for example, from 1% to 50%. The lower limit of the filling ratio is preferably 2%, more preferably 3%, still more preferably 5%. Further, the upper limit of the filling ratio is preferably 30%, more preferably 25%. In each of the case where the filling ratio is excessively small and the case where the filling ratio is excessively large, the effect of the addition of the particles to lower the surface hardness of the cladding layer may not be obtained sufficiently. On the other hand, when the filling ratio is, for example, from 2% to 50%, the surface hardness of the cladding layer can be easily controlled to a predetermined range to be described later without a significant increase in storage modulus.

The cladding layer **11** has a surface hardness of from HB to 2H, preferably from F to 2H, more preferably from H to 2H. When the surface hardness is more than 2H, a stress occurring inside the resin for forming a cladding layer due to its curing cannot be relaxed, and the stress is concentrated on the surface, with the result that a crack is liable to occur. Meanwhile, when the surface hardness is less than HB, a problem may arise in, for example, that a flaw is liable to occur.

The cladding layer **11** has a storage modulus (25°C) of preferably 0.3 GPa or less, more preferably from 0.15 GPa to 0.3 GPa, still more preferably from 0.16 GPa to 0.25 GPa. With such storage modulus, a stress due to curing shrinkage is suitably dispersed, and hence such storage modulus can contribute to the prevention of a crack.

The core layer **12** is formed substantially in a square column shape extending in a direction orthogonal to both a width direction and a thickness direction of the cladding layer **11,** and is buried in an upper end portion substantially at the center of the width direction of the cladding layer **11.** The direction in which the core layer **12** extends serves as a direction in which light is propagated in the optical waveguide.

The core layer **12** is arranged so that the upper surface thereof is flush with an upper surface of the cladding layer **11.** A metal layer or a protective layer can be arranged efficiently only on an upper side of the core layer in the SPR sensor cell or the colorimetric sensor cell to be described later by arranging the core layer so that the upper surface thereof is flush with the upper surface of the cladding layer. Further, the core layer is arranged so that both end surfaces thereof in the extending direction are flush with both end surfaces of the cladding layer in the extending direction.

A refractive index (N_{CO}) of the core layer **12** can be set to any suitable value depending on intended use and the like. For example, when the optical waveguide **100** is applied to an SPR sensor cell, the refractive index (N_{CO}) of the core layer **12** is preferably 1.43 or less, more preferably less than 1.40, still more preferably 1.38 or less. When the refractive index of the core layer is set to 1.43 or less, the detection sensitivity can be markedly improved. The lower limit of the refractive index of the core layer is preferably 1.34. When the refractive index of the core layer is 1.34 or more, SPR can be excited even in an aqueous solution-based sample (refractive index of water: 1.33), and a generally used material can be used.

The refractive index (N_{CO}) of the core layer **12** is higher than the refractive index (N_{CL}) of the cladding layer **11.** The difference (N_{CO}-N_{CL}) between the refractive index of the core layer and the refractive index of the cladding layer is preferably 0.010 or more, more preferably 0.020 or more, still more preferably 0.025 or more. When the difference between the refractive index of the core layer and the refractive index of the cladding layer falls within such range, the optical waveguide **100** can be set to the so-called multimode. Thus, the quantity of light transmitted through the optical waveguide can be increased, and the S/N ratio can be enhanced when the optical waveguide is applied to the SPR sensor cell or the colorimetric sensor cell to be described later. Further, the difference between the refractive index of the core layer and the refractive index of the cladding layer is preferably 0.15 or less, more preferably 0.10 or less, still more preferably 0.050 or less.

The thickness of the core layer **12** is, for example, from 5 µm to 200 µm, preferably from 20 µm to 200 µm. Further, the width of the core layer is, for example, from 5 µm to 200 µm, preferably from 20 µm to 200 µm. When the core layer has such thickness and/or width, the optical waveguide **100** can be set to the so-called multimode. Further, the length (waveguide length) of the core layer **12** is, for example, from 2 mm to 50 mm, preferably from 10 mm to 20 mm.

Any suitable material may be used as a material for forming the core layer **12** as long as the effects of the present invention can be obtained. For example, the core layer **12** may be formed of a resin that is similar to the resin for forming a cladding layer and is adjusted so as to have a higher refractive index than that of the cladding layer.

One core layer is illustrated in FIG. **1****,** but the number of the core layers maybe changed depending on purposes. Specifically, a plurality of core layers may be formed at predetermined intervals in a width direction of the cladding layer. Further, any suitable shape (for example, a semi-cylindrical shape or a convex columnar shape) may be employed as the shape of the core layer depending on purposes.

### [B. SPR Sensor Cell]

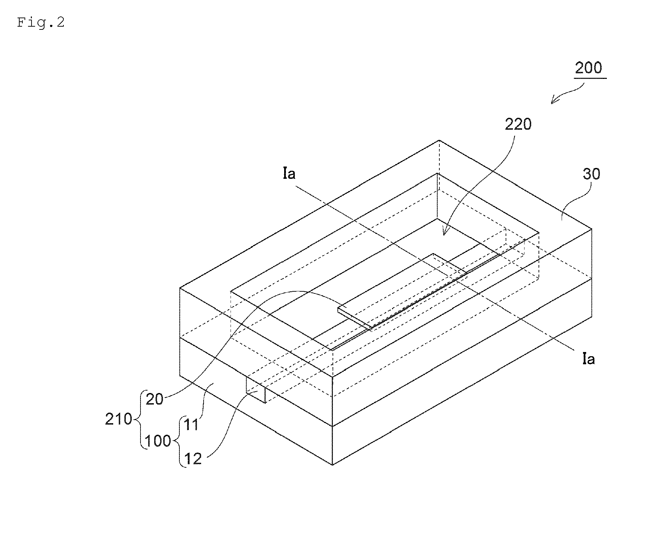

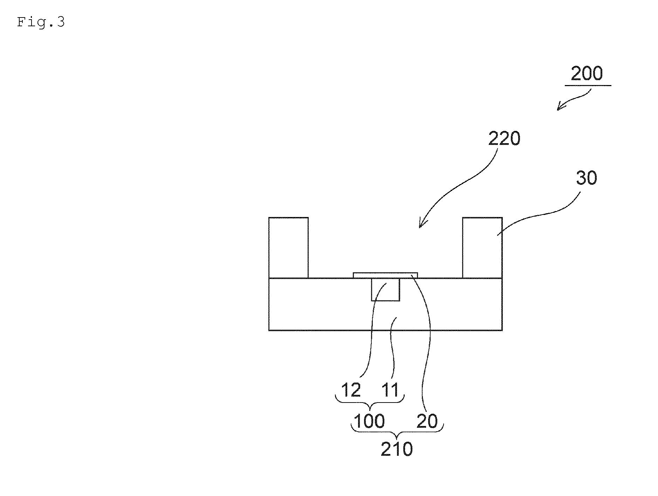

FIG. **2** is a schematic perspective view for illustrating an SPR sensor cell according to the preferred embodiment of the present invention. FIG. **3** is a schematic sectional view of the SPR sensor cell illustrated in FIG. **2** taken along the line **Ia-Ia.**

An SPR sensor cell **200** has, as illustrated in FIG. **2** and FIG. **3****,** a bottomed frame shape having a substantially rectangular shape in a plan view, and includes : the optical waveguide **100** including the under-cladding layer **11** and the core layer **12** buried in the under-cladding layer **11** so that the upper surface of the core layer **12** is exposed; and a metal layer **20** for covering the under-cladding layer **11** and the core layer **12.** The optical waveguide **100** and the metal layer **20** serve as a detection unit **210** configured to detect a state of a sample and/or a change thereof. In the illustrated embodiment, the SPR sensor cell **200** includes a sample placing portion **220** formed so as to be adjacent to the detection unit **210.** The sample placing portion **220** is defined by an over-cladding layer **30.** The over-cladding layer **30** may be omitted as long as the sample placing portion **220** can be formed appropriately. In the sample placing portion **220,** a sample (for example, a solution or powder) to be analyzed is placed so as to come into contact with the detection unit (substantially, the metal layer).

The optical waveguide **100** is as described in the above-mentioned item A.

As illustrated in FIG. **2** and FIG. **3****,** the metal layer **20** is formed so as to uniformly cover at least a part of the upper surfaces of the under-cladding layer **11** and the core layer **12.** As necessary, an easy-adhesion layer (not shown) may be formed between the under-cladding layer and the metal layer, and between the core layer and the metal layer. By forming the easy-adhesion layer, the under-cladding layer and the core layer can be fixed to the metal layer firmly.

As a material for forming the metal layer, there may be given gold, silver, platinum, copper, aluminum, and alloys thereof. The metal layer may be a single layer, or may have a laminate structure of two or more layers. The thickness (total thickness of all the layers in the case of the laminate structure) of the metal layer is preferably from 20 nm to 70 nm, more preferably from 30 nm to 60 nm.

As a material for forming the easy-adhesion layer, there may be typically given chromium or titanium. The thickness of the easy-adhesion layer is preferably from 1 nm to 5 nm.

As illustrated in FIG. **2****,** the over-cladding layer **30** is formed into the shape of a frame having a rectangular shape in a plan view so that an outer periphery of the over-cladding layer **30** becomes substantially flush with an outer periphery of the optical waveguide **100** in a plan view, on the upper surface of the optical waveguide **100.** A portion surrounded by the upper surfaces of the optical waveguide **100** and the over-cladding layer **30** is partitioned as the sample placing portion **220.** By placing a sample in the partitioned portion, the metal layer of the detection unit **210** and the sample come into contact with each other so that detection can be performed. Further,byformingsuch partitioned portion,asample can be easily placed on the surface of the metal layer, and hence the operability can be enhanced.

As a material for forming the over-cladding layer **30,** for example, there may be given the materials for forming the core layer and the under-cladding layer, and silicone rubber. The thickness of the over-cladding layer is preferably from 5 µm to 2, 000 µm, more preferably from 25 µm to 200 µm. The refractive index of the over-cladding layer is preferably lower than the refractive index of the core layer. In one embodiment, the refractive index of the over-cladding layer is equal to the refractive index of the under-cladding layer.

Although the SPR sensor cell according to the preferred embodiment of the present invention has been described above, the present invention is not limited thereto. For example, a protective layer may be arranged between the optical waveguide **100** and the metal layer **20.** In this case, the protective layer may be formed as a thin film having the same shape as that of the optical waveguide in a plan view so as to completely cover the upper surface of the optical waveguide **100.** When the protective layer is arranged, for example, in the case where the sample is liquid, the core layer and/or the cladding layer can be prevented from being swollen with the sample. As a material for forming the protective layer, for example, there are given silicon dioxide and aluminum oxide. Any such material may be preferably adjusted so as to have a lower refractive index than that of the core layer. The protective layer has a thickness of preferably from 1 nm to 100 nm, more preferably from 5 nm to 20 nm.

Further, a lid may be arranged on an upper portion of the SPR sensor cell **200** (sample placing portion **220**). With such configuration, a sample can be prevented from coming into contact with ambient air. In addition, when the sample is a solution, a change in concentration caused by evaporation of a solvent can be prevented. When the lid is arranged, an injection port for injecting a liquid sample into the sample placing portion and a discharge port for discharging the liquid sample from the sample placing portion may be formed. With such configuration, the sample can be allowed to flow to be supplied to the sample placing portion continuously, and hence the characteristics of the sample can be measured continuously.

The above-mentioned embodiments may be combined appropriately.

An example of the manner of use of such SPR sensor cell **200** is described below.

First, a sample is placed in the sample placing portion **220** of the SPR sensor cell **200** so that the sample and the metal layer **20** are brought into contact with each other. Then, light from any suitable light source is guided to the SPR sensor cell **200** (core layer **12**). The light guided to the SPR sensor cell **200** (core layer **12**) is transmitted through the SPR sensor cell **200** (core layer **12**) while repeating total reflection in the core layer **12,** and part of the light enters the metal layer **20** on an upper surface of the core layer **12** and is attenuated by surface plasmon resonance. The light transmitted through and output from the SPR sensor cell **200** (core layer **12**) is guided to any suitable optical measuring instrument. That is, the intensity of light having a wavelength generating surface plasmon resonance in the core layer **12** is attenuated in the light guided from the SPR sensor **200** to the optical measuring instrument. The wavelength of light generating surface plasmon resonance depends on, for example, the refractive index of the sample brought into contact with the metal layer **20.** Therefore, through the detection of the attenuation of the light intensity of the light guided to the optical measuring instrument, the refractive index of the sample and a change thereof can be detected.

### [C. Colorimetric Sensor Cell]

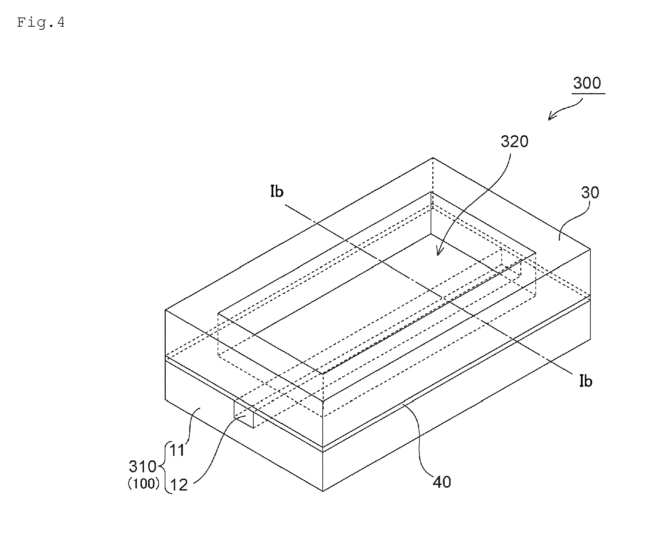

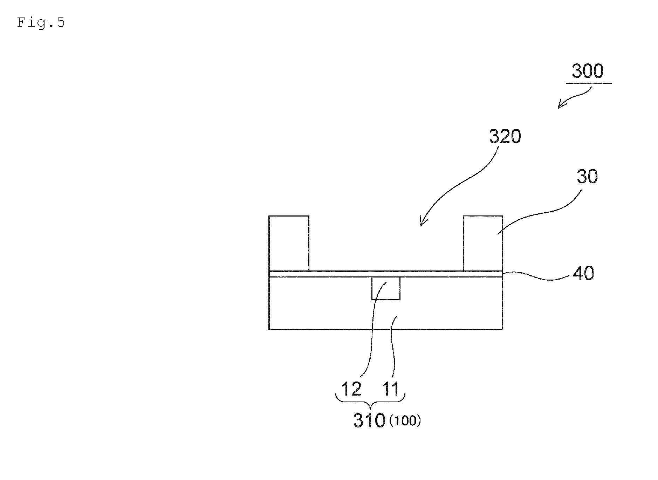

FIG. **4** is a schematic perspective view for illustrating a colorimetric sensor cell according to the preferred embodiment of the present invention. FIG. **5** is a schematic sectional view of the colorimetric sensor cell illustrated in FIG. **4** taken along the line **Ib-Ib.**

A colorimetric sensor cell **300** has, as illustrated in FIG. **4** and FIG. **5****,** a bottomed frame shape having a substantially rectangular shape in a plan view, and includes the optical waveguide **100** including the under-cladding layer **11** and the core layer **12** buried in the under-cladding layer **11** so that the upper surface of the core layer **12** is exposed. The optical waveguide **100** serves as a detection unit **310** configured to detect a state of a sample and/or a change thereof. In the illustrated embodiment, the colorimetric sensor cell **300** further includes a protective layer **40** for covering the upper surface of the optical waveguide 100 and a sample placing portion **320** formed so as to be adjacent to the detection unit **310** through the protective layer **40.** The protective layer **40** may be omitted depending on purposes. The sample placing portion **320** is defined by the over-cladding layer **30.** The over-cladding layer **30** may be omitted as long as the sample placing portion **320** can be formed appropriately. In the sample placing portion **320,** a sample (for example, a solution or powder) to be analyzed is placed so as to come into contact with the detection unit (the protective layer **40** in the illustrated example). Further, although not illustrated, similarly to the SPR sensor cell described in the above-mentioned item B, a lid may be arranged on the colorimetric sensor cell **300** (sample placing portion **320**).

The optical waveguide **100** is as described in the above-mentioned item A. Further, the over-cladding layer **30** and the protective layer **40** are as described in the above-mentioned item B.

An example of the manner of use of such colorimetric sensor cell **300** is described below.

First, a sample is placed in the sample placing portion **320** of the colorimetric sensor cell **300** so that the sample and the protective layer **40** are brought into contact with each other. Then, light from any suitable light source is guided to the colorimetric sensor cell **300** (core layer **12**). The light guided to the colorimetric sensor cell **300** (core layer **12**) is transmitted through the colorimetric sensor cell **300** (core layer **12**) while repeating total reflection in the core layer **12.** In addition, part of the light leaks out of the core layer **12** as an evanescent wave, and enters the sample on the upper surface of the core layer **12** through the protective layer **40** to be attenuated. The light that has been transmitted through the colorimetric sensor cell **300** (core layer **12**) to be emitted is guided to any suitable light measuring instrument. That is, the intensity of light having a wavelength that is absorbed by the sample on the core layer **12** is attenuated in the light guided from the colorimetric sensor cell **300** to the light measuring instrument. The wavelength that is absorbed by the sample differs depending on, for example, a color of the sample placed on the colorimetric sensor cell **300,** and hence the color of the sample and a change thereof can be detected through detection of the attenuation of the light intensity of the light guided to the light measuring instrument.

### [D. Manufacturing Method]

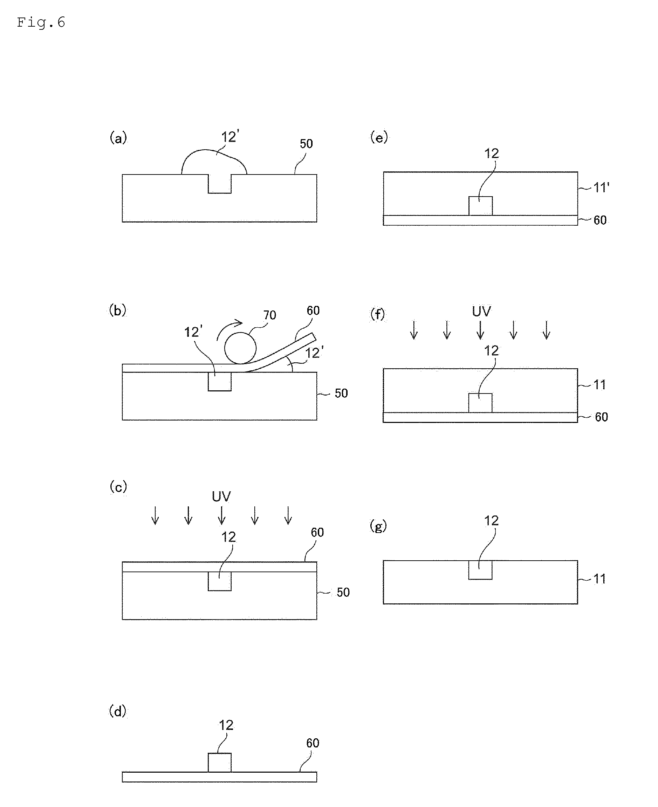

Any suitable method may be used as a method of manufacturing the optical waveguide of the present invention. As a specific example of the method of producing the optical waveguide of the present invention, a method illustrated in FIGS. **6** or a method illustrated in FIGS. **3** of JP 2012-215541 A is given.

In the method illustrated in FIGS. **6****,** first, as illustrated in FIG. **6(a)**, a material **12'** for forming a core layer is applied on a surface of a die **50** having a recessed portion corresponding to the shape of the core layer. Then, as illustrated in FIG. **6(b)**, a transfer film **60** is bonded onto the surface of the die **50** while the transfer film **60** is pressed in a predetermined direction with pressing means **70.** Thus, the excessive material **12'** for forming a core layer is removed while the material **12'** for forming a core layer is filled into the recessed portion. After that, as illustrated in FIG. **6(c)**, the material **12'** for forming a core layer filled into the recessed portion is irradiated with ultraviolet rays to be cured. Thus, the core layer **12** is formed. In addition, as illustrated in FIG. **6(d)****,** the transfer film **60** is peeled from the die **50,** and the core layer **12** is thus transferred onto the transfer film **60.**

Then, as illustrated in FIG. **6(e)****,** a material **11'** for forming a cladding layer, which includes a resin for forming a cladding layer and particles dispersed in the resin as appropriate, is applied on the core layer **12** so as to cover the core layer **12**. Alternatively, unlike the illustrated example, the material **11'** for forming a cladding layer may be applied on another support (for example, a PET film subjected to corona treatment) in advance, and the support and the transfer film **60** may be bonded to each other so that the material **11'** for forming a cladding layer covers the core layer **12.** After that, as illustrated in FIG. **6(f)****,** the material **11'** for forming a cladding layer is irradiated with ultraviolet rays to be cured. Thus, the cladding layer **11** is formed. Then, as illustrated in FIG. **6(g)**, the transfer film **60** is peeled to be removed and the resultant is flipped upside down. Thus, the optical waveguide including the core layer **12** buried in the cladding layer **11** is obtained.

The irradiation conditions for the ultraviolet rays can be appropriately set depending on the kinds of the materials. The materials may be heated as needed. The heating may be performed before the ultraviolet ray irradiation, after the ultraviolet ray irradiation, or simultaneously with the ultraviolet ray irradiation. Further, any suitable method may be used as a method of dispersing the particles in the resin for forming a cladding layer.

The SPR sensor cell and the colorimetric sensor cell of the present invention can be obtained by forming desired components (a protective layer, a metal layer, an over-cladding layer, and the like) on the core exposed surface of the optical waveguide of the present invention. Methods described in JP 2012-107901 A, JP 2012-215541 A, and the like can be used as methods of forming those components.

### Examples

The present invention is hereinafter described specifically by way of Examples. However, the present invention is not limited to Examples below.

### <Refractive Index>

The refractive index was measured by forming a film having a thickness of 10 µm on a silicon wafer and measuring the refractive index of the film at a wavelength of 830 nm through use of a prism coupler refractive index measurement device.

### <Filling Ratio>

The filling ratio of the particles was calculated based on the following expression.

Filling ratio (%) = ((particle mixing rate (wt%) /bulk specific gravity (g/mL))/(100+particle mixing rate (wt%)))×100

### <Bulk Specific Gravity>

The bulk specific gravity of the particles was calculated by loading the particles into a cup having a known volume (mL), measuring a particle weight (g), and dividing the particle weight by the cup volume.

### <Average Particle Diameter>

A median diameter calculated through the laser diffraction/scattering particle size distribution measurement was used as the average particle diameter.

### <Surface Hardness>

Measurement was performed in accordance with the section 5.4 Scratch Hardness (Pencil Method) of JIS K 5600: Testing Methods for Paints.

### <Storage Modulus>

DMA measurement was performed using a thermal analysis apparatus (manufactured by NETZSCH, product number: "DMA 242 C"). The measurement was performed under the conditions of a rate of temperature increase of 2°C/min and a measurement frequency of 1 Hz. A storage modulus at 25°C was determined from the resultant DMA curve.

### <Crack>

The presence or absence of a crack in the surface of an optical waveguide was visually observed.

### <Example 1>

An SPR sensor cell was produced by a method illustrated in FIGS. **6****.** Specifically, a material for forming a core layer was dropped onto the surface of a die (length: 200 mm, width: 200 mm) having formed on its surface a recessed portion for forming a core layer having a width of 50 µm and a length (depth) of 50 µm. One end of a corona-treated surface of a PP film (thickness: 40 µm) having one surface subjected to corona treatment was brought into abutment against the surface of the die, and the other end was allowed to be warped. In this state, a roller was rotated toward the other end side while pressing the abutment part between the die and the PP film from the PP film side, to thereby bond the die and the PP film to each other. With this, the material for forming a core layer was filled into the recessedportion of the die, and thus the excessive material for forming a core layer was pushed out. Then, the material for forming a core layer was completely cured by irradiating the laminate thus obtained with ultraviolet rays from the PP film side. Thus, a core layer (refractive index: 1.384) was formed. The material for forming a core layer was prepared by stirring and dissolving 60 parts by weight of a fluorine-based UV-curable resin ("OP38Z" (trade name) manufactured by DIC Corporation) and 40 parts by weight of a fluorine-based UV-curable resin ("OP40Z" (trade name) manufactured by DIC Corporation). Then, the PP film was peeled from the die. Thus, the core layer having a substantially square column shape with a thickness of 50 µm and a width of 50 µm was transferred onto the film.

A material for forming a cladding layer was applied to the PP film so as to cover the core layer. The material for forming a cladding layer was prepared by mixing 99.4 parts by weight of a fluorine-based UV curable resin ("Fluorolink MD700" (trade name) manufactured by Solvay Specialty Polymers Japan K.K., refractive index: 1.348) and 0.6 part by weight of silica particles ("Admafine SC2500-SMJ" (trade name) manufactured by Admatechs Company Limited, refractive index: 1.45). At this time, the material for forming a cladding layer was applied so that the thickness from a surface (upper surface) of the core layer became 100 µm. Then, the material for forming a cladding layer was cured by irradiating the resultant with ultraviolet rays. Thus, a cladding layer was formed. Then, the PP film was removed by peeling, and the cladding layer and the core layer were inverted. As described above, an optical waveguide film having a core layer buried in a cladding layer was produced.

### <Example 2>

An optical waveguide film was produced in the same way as in Example 1 except that the mixing rate of the silica particles in the material for forming a cladding layer was set to 2.5 wt%.

### <Example 3>

An optical waveguide film was produced in the same way as in Example 1 except that the mixing rate of the silica particles in the material for forming a cladding layer was set to 5 wt%.

### <Example 4>

An optical waveguide film was produced in the same way as in Example 1 except that the mixing rate of the silica particles in the material for forming a cladding layer was set to 10 wt%.

### <Example 5>

An optical waveguide film was produced in the same way as in Example 1 except that different silica particles ("Admafine SC5500-SMJ" (trade name) manufactured by Admatechs Company Limited) were used, and the mixing rate of the silica particles in the material for forming a cladding layer was set to 0.8 wt%.

### <Example 6>

An optical waveguide film was produced in the same way as in Example 1 except that different silica particles ("Admafine SC5500-SMJ" (trade name) manufactured by Admatechs Company Limited) were used, and the mixing rate of the silica particles in the material for forming a cladding layer was set to 2 wt%.

### <Example 7>

An optical waveguide film was produced in the same way as in Example 1 except that different silica particles ("Admafine SC5500-SMJ" (trade name) manufactured by Admatechs Company Limited) were used, and the mixing rate of the silica particles in the material for forming a cladding layer was set to 5 wt%.

### <Example 8>

An optical waveguide film was produced in the same way as in Example 1 except that different silica particles ("Admafine SC5500-SMJ" (trade name) manufactured by Admatechs Company Limited) were used, and the mixing rate of the silica particles in the material for forming a cladding layer was set to 10 wt%.

### <Example 9>

An optical waveguide film was produced in the same way as in Example 1 except that different silica particles ("AEROSIL R974" (trade name) manufactured by Nippon Aerosil Co., Ltd., refractive index: 1.45) were used, and the mixing rate of the silica particles in the material for forming a cladding layer was set to 2.6 wt%.

### <Example 10>

An optical waveguide film was produced in the same way as in Example 1 except that different silica particles ("AEROSIL R974" (trade name) manufactured by Nippon Aerosil Co., Ltd., refractive index: 1.45) were used, and the mixing rate of the silica particles in the material for forming a cladding layer was set to 5 wt%.

### <Example 11>

An optical waveguide film was produced in the same way as in Example 1 except that different silica particles ("SYLOPHOBIC 507" (trade name) manufactured by Fuji Silysia Chemical Ltd., refractive index: 1.45) were used, and the mixing rate of the silica particles in the material for forming a cladding layer was set to 3.2 wt%.

### <Example 12>

An optical waveguide film was produced in the same way as in Example 1 except that different silica particles ("SYLOPHOBIC 702" (trade name) manufactured by Fuji Silysia Chemical Ltd., refractive index: 1.45) were used, and the mixing rate of the silica particles in the material for forming a cladding layer was set to 4 wt%.

### <Example 13>

An optical waveguide film was produced in the same way as in Example 1 except that different silica particles ("SYLOPHOBIC 702" (trade name) manufactured by Fuji Silysia Chemical Ltd., refractive index: 1.45) were used, and the mixing rate of the silica particles in the material for forming a cladding layer was set to 7.2 wt%.

### <Example 14>

An optical waveguide film was produced in the same way as in Example 1 except that titania particles ("SRD 02-W" (trade name) manufactured by Sakai Chemical Industry Co. Ltd., crystal phase: rutile type, refractive index: 2.72) were used, and the mixing rate of the titania particles in the material for forming a cladding layer was set to 2 wt%.

### <Example 15>

An optical waveguide film was produced in the same way as in Example 1 except that different silica particles ("Admafine SC1500-SMJ" (trade name) manufactured by Admatechs Company Limited, refractive index: 1.45) were used, and the mixing rate of the silica particles in the material for forming a cladding layer was set to 6.5 wt%.

### <Example 16>

An optical waveguide film was produced in the same way as in Example 1 except that different silica particles ("Admafine SC1500-SMJ" (trade name) manufactured by Admatechs Company Limited, refractive index: 1.45) were used, and the mixing rate of the silica particles in the material for forming a cladding layer was set to 10 wt%.

### <Comparative Example 1>

An optical waveguide film was produced in the same way as in Example 1 except that the mixing rate of the silica particles in the material for forming a cladding layer was set to 0 wt% (that is, the silica particles were not used).

### <Comparative Example 2>

An optical waveguide film was produced in the same way as in Example 1 except that the mixing rate of the silica particles in the material for forming a cladding layer was set to 0.3 wt%.

### <Comparative Example 3>

An optical waveguide film was produced in the same way as in Example 1 except that the mixing rate of the silica particles in the material for forming a cladding layer was set to 26 wt%.

### <Comparative Example 4>

An optical waveguide film was produced in the same way as in Example 1 except that different silica particles ("SYLOPHOBIC 702" (trade name) manufactured by Fuji Silysia Chemical Ltd., refractive index: 1.45) were used, and the mixing rate of the silica particles in the material for forming a cladding layer was set to 25 wt%.

The evaluation results of each of the optical waveguide films obtained in Examples and Comparative Examples are shown in Table 1.

**[Table 1]**

| | Average particle diameter (µm) | Mixing rate (wt%) | Filling ratio (%) | Surface hardness | Storage modulus (GPa) | Crack |
|---|---|---|---|---|---|---|
| Example 1 | 0.5 | 0.6 | 2 | 2H | 0.15 | Absent |
| Example 2 | 0.5 | 2.5 | 8 | 2H | 0.19 | Absent |
| Example 3 | 0.5 | 5 | 14 | H | 0.19 | Absent |
| Example 4 | 0.5 | 10 | 25 | H | 0.23 | Absent |
| Example 5 | 1.9 | 0.8 | 2 | 2H | 0.16 | Absent |
| Example 6 | 1.9 | 2 | 5 | 2H | 0.19 | Absent |
| Example 7 | 1.9 | 5 | 11 | HB | 0.20 | Absent |
| Example 8 | 1.9 | 10 | 20 | H | 0.21 | Absent |
| Example 9 | 0.012 | 2.6 | 34 | H | 0.22 | Absent |
| Example 10 | 0.012 | 5 | 50 | 2H | 0.23 | Absent |
| Example 11 | 2.7 | 3.2 | 8 | 2H | 0.20 | Absent |
| Example 12 | 4.1 | 4 | 12 | H | 0.23 | Absent |
| Example 13 | 4.1 | 7.2 | 20 | 2H | 0.25 | Absent |
| Example 14 | 0.035 | 2 | 30 | H | 0.19 | Absent |
| Example 15 | 0.3 | 6.5 | 14 | 2H | 0.16 | Absent |
| Example 16 | 0.3 | 10 | 30 | HB | 0.20 | Absent |
| Comparative Example 1 | - | - | 0 | 4H | 0.12 | Present |
| Comparative Example 2 | 0.5 | 0.3 | 1 | 3H | 0.13 | Present |
| Comparative Example 3 | 0.5 | 26 | 60 | 3H | 0.23 | Present |
| Comparative Example 4 | 4.1 | 25 | 70 | 5H | 0.30 | Present |

As apparent from Table 1, in each of the optical waveguides of Comparative Examples including a cladding layer having a surface hardness of more than 2H, a crack occurred in the cladding layer. On the other hand, in each of the optical waveguides of Examples including a cladding layer having a surface hardness of 2H or less, the occurrence of a crack was prevented. In addition, according to the present invention, the occurrence of a crack can be prevented by adding particles to a resin which has heretofore been preferably selected from the viewpoints of optical properties, workability, and the like (such as a halogen-containing resin), and hence there is also an advantage in that it is not necessary to develop or select a new resin capable of preventing the occurrence of a crack.

### Industrial Applicability

The optical waveguide of the present invention can be suitably used as the detection unit of the SPR sensor cell, the colorimetric sensor cell, or the like.

### Reference Signs List

- **11**: cladding layer (under-cladding layer)
- **12**: core layer
- **20**: metal layer
- **30**: over-cladding layer
- **40**: protective layer
- **100**: optical waveguide
- **200**: SPR sensor cell
- **300**: colorimetric sensor cell

## Claims

1. An optical waveguide, comprising:
a cladding layer; and
a core layer buried in the cladding layer so that at least one surface of the core layer is exposed,
wherein the cladding layer has a surface hardness of from HB to 2H.

2. The optical waveguide according to claim 1, wherein the cladding layer contains a resin for forming a cladding layer and particles dispersed in the resin for forming a cladding layer.

3. The optical waveguide according to claim 2, wherein a filling ratio of the particles in the cladding layer is from 2% to 50%.

4. The optical waveguide according to claim 2, wherein an average particle diameter (ϕ) of the particles is from 200 nm to 2.5 µm.

5. The optical waveguide according to claim 1, wherein the cladding layer has a storage modulus of 0.3 GPa or less.

6. The optical waveguide according to claim 2, wherein the resin for forming a cladding layer contains a halogen.

7. An SPR sensor cell, comprising the optical waveguide of claim 1.

8. A colorimetric sensor cell, comprising the optical waveguide of claim 1.
